# EUROPÄISCHE PATENTANMELDUNG

(11) **EP 3 758 320 A1**
(43) Veröffentlichungstag der Anmeldung: **30.12.2020**
(21) Anmeldenummer: 19181985.3
(22) Anmeldetag: 24.06.2019
(51) Int. Cl.: H04L 29/06, G06F 21/57

(54) **GERÄTE UND VERFAHREN ZUM ÜBERPRÜFEN VON GERÄTEN**

(71) Anmelder: Siemens Aktiengesellschaft, 80333 München (DE)
(72) Erfinder: Falk, Rainer, 85586 Poing (DE); Fries, Steffen, 85598 Baldham (DE)

(57) **Zusammenfassung**

Die Erfindung betrifft ein Verfahren und Geräte, um eine Überwachung in Automatisierungsanlagen möglichst flexibel zu realisieren. Das Überwachen in Automatisierungsanlagen kann mittels eines Überprüfungsgerätes realisiert werden, das eine Überprüfung von Geräten der Automatisierungsanlage anhand eines Lebenszyklus-Zustandes eines entsprechenden Gerätes durchführt.

## Beschreibung

Die Erfindung bezieht sich auf Geräte und Verfahren zum Überprüfen von Geräten.

Nachfolgend werden Aspekte der Erfindung erläutert.

Gemäß einem ersten Aspekt betrifft die Erfindung ein Überprüfungsgerät aufweisend:
- eine Kommunikationsschnittstelle, die zum Empfangen von Lebenszyklusdaten eines Gerätes eingerichtet ist;
- ein Überprüfungsmodul, wobei
   ∘ das Überprüfungsmodul dazu eingerichtet ist, ein Prüfergebnis einer Prüfung der Lebenszyklusdaten des Gerätes zu ermitteln,
   ∘ abhängig vom Prüfergebnis Steuerbefehle zum Steuern des Gerätes und/oder Steuerbefehle zum Steuern einer Kommunikation mit dem Gerät und/oder Steuerbefehle zum Authentisieren des Gerätes bereitgestellt und/oder ausgeführt werden.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert. Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", "aufweisen" und dergleichen, insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter einer "Prüfsumme" kann im Zusammenhang mit der Erfindung beispielsweise eine kryptographische Prüfsumme oder kryptographischer Hash bzw. Hashwert verstanden werden. Eine entsprechende Prüfsumme kann z. B. mittels einer kryptographischen Hashfunktion gebildet werden. Die Prüfsumme wird z. B. über eine Nachricht (z. B. die Nachricht oder die weitere Nachricht) und/oder über eine oder mehrere Nachrichten (z. B. die Nachricht und die weitere Nachricht) und/oder über einen Teilbereich einer Nachricht (z. B. die Nachricht oder die weitere Nachricht) gebildet oder berechnet. Eine Prüfsumme kann z. B. eine digitale Signatur oder ein kryptographischer Nachrichtenauthentisierungscode sein.

Bei weiteren Ausführungsformen des Überprüfungsgerätes wird abhängig von den Steuerbefehlen und/oder des Prüfergebnisses eine Filterung zulässiger Aktionen und/oder Datenpakete des Geräts gesteuert.

Bei weiteren Ausführungsformen des Überprüfungsgerätes sind Lebenszyklusdaten als Bitfolge oder als textuelle Zeichenkette codiert.

Bei weiteren Ausführungsformen des Überprüfungsgerätes umfassen die Lebenszyklusdaten einen Lebenszyklus-Zustand des Gerätes, wobei der Lebenszyklus-Zustand beispielsweise einen Zustand "Undefiniert" oder "Festgelegt" oder "Startbereit" oder "Deaktiviert" oder "Fehler", "Manipuliert", "Zurückgesetzt" umfasst.

Die Lebenszyklus-Zustände sind beispielsweise wie folgt definiert:
Undefiniert
   (oder auch als "Undefined" bezeichnet)
   Dem entsprechenden Gerät wurde noch kein Identifizierer (kurz ID) oder eindeutiger Identifizierer (engl. Unique Identifier, UID) z. B. in der Fertigung zugeordnet).
Festgelegt
   (oder auch als "Imprinted" bezeichnet)
   Für das Geräte wurde eine ID festgelegt und beispielsweise in der Firmware des Gerätes gespeichert.
Startbereit
   (oder auch als "Bootstrapped" bezeichnet)
   Auf dem Gerät sind z. B. operative (kryptographische) Schlüssel und/oder Konfigurationsdaten eingespielt.
Deaktiviert
   (oder auch als "Deactivated" bezeichnet)
   Das Gerät wurde außer Betrieb genommen (Außerbetriebnahme) .
Fehler
   (oder auch als "Failure" bezeichnet)
   Bei dem Gerät wurde ein Fehler z. B. durch Selbsttest erkannt.
Manipuliert
   (oder auch als "Integrity Violation" bezeichnet)
   Es wurde eine Manipulation (z. B. wurde eine Malware auf dem Gerät durch eine Antivirensoftware gefunden, oder es wurde eine physikalische Manipulation erkannt) erkannt.
Zurückgesetzt
   (oder auch als "Factory Reset" bezeichnet)
   Die Benutzerkonfiguration und/oder weitere Benutzerdaten wurden beispielsweise gelöscht und/oder das Gerät wurde beispielsweise auf Werkseinstellungen zurückgesetzt.

Bei weiteren Ausführungsformen des Überprüfungsgerätes wird bei einem Wechsel des Lebenszyklus-Zustands zusätzlich ein Lebenszyklus-Zähler aktualisiert, wobei beispielsweise durch das Überprüfungsgerät ein Lebenszyklus-Zähler für das Gerät gespeichert und/oder gesteuert wird.

Bei weiteren Ausführungsformen des Überprüfungsgerätes umfassen die Lebenszyklusdaten die Konfigurationsdaten des Gerätes, wobei die Konfigurationsdaten beispielsweise aktuell konfigurierte kryptographische Schlüssel und/oder Zertifikate und/oder Security-Token des Gerätes und/oder Laufzeiten für kryptographische Schlüssel sind.

Bei weiteren Ausführungsformen des Überprüfungsgerätes sind die Lebenszyklusdaten in einer TLS-Protokollerweiterung oder in einer Zertifikatsanforderungsnachricht gespeichert, beispielsweise in codierter Form darin umfasst. Dies hat den Vorteil, dass die Lebenszyklusdaten im Rahmen eines TLS-Verbindungsaufbaus oder beim Anfordern eines digitalen Zertifikats einfach übermittelt werden können.

Bei weiteren Ausführungsformen des Überprüfungsgerätes sind die Lebenszyklusdaten mittels eines kryptographischen Schutzes kryptographisch (z. B. mittels einer Prüfsumme oder einer Verschlüsselung) geschützt, wobei das Überprüfungsmodul dazu eingerichtet ist, bei der Prüfung den kryptographischen Schutz der Lebenszyklusdaten zu überprüfen (und/oder zu entfernen) und/oder ein Ergebnis dieses Prüfens im Prüfergebnis zu speichern.

Bei weiteren Ausführungsformen des Überprüfungsgerätes wird der kryptographische Schutz mittels gerätespezifischer kryptographischer Daten durch das Gerät erzeugt.

Gemäß einem ersten Aspekt betrifft die Erfindung ein Gerät aufweisend:
- ein Zustandsmodul, wobei das Zustandsmodul dazu eingerichtet ist, in einem Speicher Lebenszyklusdaten des Gerätes zu speichern;
- eine Kommunikationsschnittstelle, wobei die Kommunikationsschnittstelle dazu eingerichtet ist, Lebenszyklusdaten an einen Empfänger, beispielsweise ein Überprüfungsgerät, zu senden.

Bei weiteren Ausführungsformen des Gerätes umfassen die Lebenszyklusdaten einen Lebenszyklus-Zustand des Gerätes, wobei der Lebenszyklus-Zustand beispielsweise einen Zustand "Undefiniert" oder "Festgelegt" oder "Startbereit" oder "Deaktiviert oder "Fehler", "Manipuliert", "Zurückgesetzt" umfasst.

Bei weiteren Ausführungsformen des Gerätes wird bei einem Wechsel des Lebenszyklus-Zustands zusätzlich ein Lebenszyklus-Zähler aktualisiert.

Bei weiteren Ausführungsformen des Gerätes umfassen die Lebenszyklusdaten die Konfigurationsdaten des Gerätes, wobei die Konfigurationsdaten beispielsweise aktuell konfigurierte kryptographische Schlüssel und/oder Zertifikate und/oder Security-Token des Gerätes und/oder Laufzeiten für kryptographische Schlüssel sind.

Bei weiteren Ausführungsformen des Gerätes sind die Lebenszyklusdaten in einer TLS-Protokollerweiterung oder in einer Zertifikatsanforderungsnachricht gespeichert, die das Überprüfungsgerät empfängt. Beispielsweise können die Lebenszyklusdaten in codierter Form darin umfasst sein. Dies hat den Vorteil, dass die Lebenszyklusdaten im Rahmen eines TLS-Verbindungsaufbaus oder beim Anfordern eines digitalen Zertifikats einfach übermittelt werden können.

Bei weiteren Ausführungsformen des Gerätes sind die Lebenszyklusdaten mittels eines kryptographischen Schutzes kryptographisch geschützt, wobei das Zustandsmodul dazu eingerichtet ist den kryptographischen Schutz der Lebenszyklusdaten zu erzeugen.

Bei weiteren Ausführungsformen des Gerätes wird der kryptographische Schutz mittels gerätespezifischer kryptographischer Daten durch das Gerät erzeugt.

Die Erfindung ist z. B. vorteilhaft, um die Möglichkeit zur Manipulation, insbesondere eines Onboarding-Vorgangs, aber auch des operativen Betriebs, einzuschränken.

Hierzu werden beispielsweise beim Ermitteln des Prüfergebnisses die Lebenszyklusdaten (z. B. der Lebenszyklus-Zustand und/oder die die Konfigurationsdaten) mit Vorgabewerten (z. B. Vorgabewerte einer Policy) des Überprüfungsgerätes verglichen, und es wird z. B. überprüft, ob die Lebenszyklusdaten die Vorgabewerte einhalten.

Die Vorgabewerte sind beispielsweise anwendungsspezifisch definierbar, dabei lassen sich z. B. unterschiedliche Schutzziele durchsetzen:
- beispielsweise werden von einem Gerät, dessen Lebenszyklusdaten einen Lebenszyklus-Zustand wie "Manipuliert" oder "Fehler" aufweist, keine operativen Statusdaten / Steuerdaten als gültig akzeptiert (oder sie werden entsprechend mit einem Attribut gekennzeichnet). Dies wird beispielsweise mit den Steuerbefehlen zum Steuern der Kommunikation anhand des Prüfergebnisses gesteuert.
- Ein automatisiertes Onboarding (z. B. ein Kommunizieren mit dem Gerät) wird z. B. vom Überprüfungsgerät (z. B. ein Backend-System) durchgeführt, wenn das Gerät sich beispielsweise in einem Lebenszyklus-Zustand wie "Startbereit" oder "Festgelegt" befindet.

Zusätzlich können beispielsweise aus den Lebenszyklusdaten und/oder dem Prüfergebnis notwendige Maßnahmen im Kontext einer Sicherheitsbeziehung abgeleitet werden, wie z. B. eine Schlüsselaktualisierung oder auch Software-Aktualisierung vor der Inbetriebnahme einer langlaufenden Kommunikationsbeziehung oder kritischen Operation, um z. B. eine Aktualisierung im Kontext einer Verbindung oder eines kritischen Operation des Gerätes zu vermeiden.

Gemäß einem weiteren Aspekt betrifft die Erfindung ein computerimplementiertes Verfahren zum Überprüfen eines Gerätes mit folgenden Verfahrensschritten:
- Empfangen von Lebenszyklusdaten eines Gerätes;
- Ermitteln eines Prüfergebnisses einer Prüfung der Lebenszyklusdaten des Gerätes;
- Ausführen von Steuerbefehlen zum Steuern des Gerätes und/oder Steuerbefehlen zum Steuern einer Kommunikation mit dem Gerät und/oder Steuerbefehlen zum Authentisieren des Gerätes.

Bei weiteren Ausführungsformen des Verfahrens umfasst das Verfahren weitere Verfahrensschritte, um die funktionalen Merkmale des Überprüfungsgerätes oder um weitere Merkmale des Überprüfungsgerätes bzw. dessen Ausführungsformen zu realisieren.

Gemäß einem weiteren Aspekt betrifft die Erfindung ein computerimplementiertes Verfahren zum Senden von Lebenszyklusdaten eines Gerätes mit folgenden Verfahrensschritten:
- Speichern von Lebenszyklusdaten des Gerätes;
- Senden der Lebenszyklusdaten an einen Empfänger, beispielsweise ein Überprüfungsgerät.

Bei weiteren Ausführungsformen des Verfahrens umfasst das Verfahren weitere Verfahrensschritte, um die funktionalen Merkmale des Gerätes oder um weitere Merkmale des Gerätes bzw. dessen Ausführungsformen zu realisieren.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass das genannte erfindungsgemäße Überprüfungsgerät oder Gerät erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße Überprüfungsgerät oder Gerät erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;
- Fig. 4: ein weiteres Ausführungsbeispiel der Erfindung;
- Fig. 5: ein weiteres Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies explizit in dem jeweiligen Ausführungsbeispiel genannt sein muss.

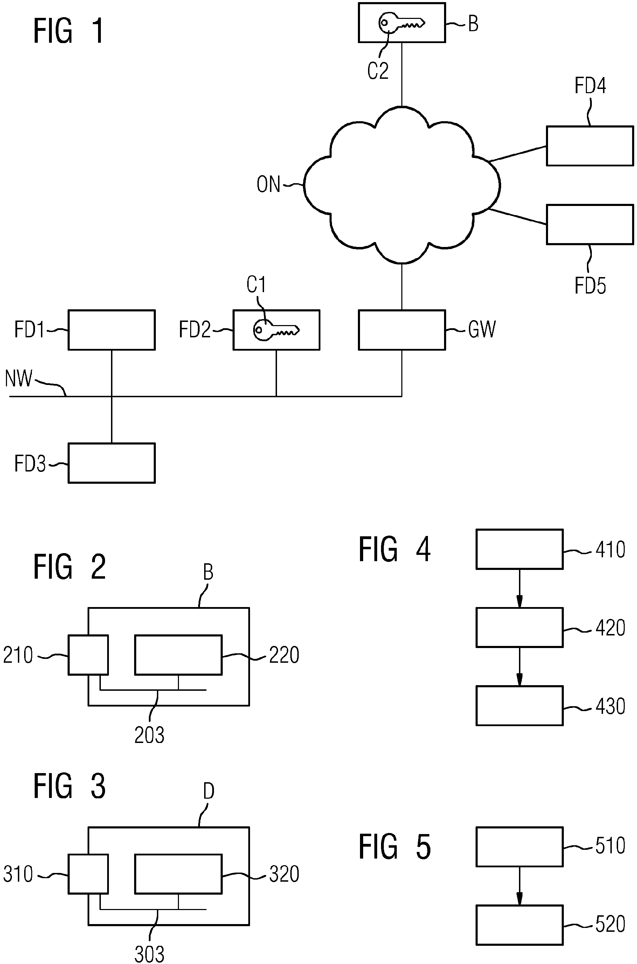

Fig. 1 zeigt in Verbindung mit Fig. 2 und Fig. 3 ein Ausführungsbeispiel der Erfindung in Form eines Systems bei dem z. B. ein erfindungsgemäßes Überprüfungsgerät mit einem erfindungsgemäßen Gerät interagieren.

Die Fig. 2 zeigt dabei das Überprüfungsgerät B, wobei das Überprüfungsgerät B z. B. als Back-End oder Cloudservice realisiert ist. Das Überprüfungsgerät B umfasst beispielsweise eine Kommunikationsschnittstelle 210 und ein Überprüfungsmodul 220, die vorzugsweise über einen Bus 203 kommunikativ verbunden sind.

Die Kommunikationsschnittstelle 210 ist zum Empfangen von Lebenszyklusdaten eines Gerätes (z. B. das Gerät aus Fig. 3) eingerichtet.

Das Überprüfungsmodul 220 ist dazu eingerichtet, ein Prüfergebnis einer Prüfung der Lebenszyklusdaten des Gerätes zu ermitteln, wobei abhängig vom Prüfergebnis Steuerbefehle zum Steuern des Gerätes und/oder Steuerbefehle zum Steuern einer Kommunikation mit dem Gerät und/oder Steuerbefehle zum Authentisieren des Gerätes bereitgestellt und/oder ausgeführt werden.

Beispielsweise werden beim Ermitteln des Prüfergebnisses die Lebenszyklusdaten (z. B. der Lebenszyklus-Zustand und/oder die die Konfigurationsdaten) mit Vorgabewerten (z. B. Vorgabewerte einer Policy) des Überprüfungsgerätes verglichen, und es wird z. B. überprüft, ob die Lebenszyklusdaten die Vorgabewerte einhalten.

Die Vorgabewerte sind beispielsweise anwendungsspezifisch definierbar, dabei lassen sich z. B. unterschiedliche Schutzziele durchsetzen:
- beispielsweise werden von einem Gerät, dessen Lebenszyklusdaten einen Lebenszyklus-Zustand wie "Manipuliert" oder "Fehler" aufweist, keine operativen Statusdaten / Steuerdaten als gültig akzeptiert (oder sie werden entsprechend mit einem Attribut gekennzeichnet). Dies wird beispielsweise mit den Steuerbefehlen zum Steuern der Kommunikation anhand des Prüfergebnisses gesteuert.
- Ein automatisiertes Onboarding (z. B. ein Kommunizieren mit dem Gerät) wird z. B. vom Überprüfungsgerät (z. B. ein Backend-System) durchgeführt, wenn das Gerät sich beispielsweise in einem Lebenszyklus-Zustand wie "Startbereit" oder "Festgelegt" befindet.

Zusätzlich können beispielsweise aus den Lebenszyklusdaten und/oder dem Prüfergebnis notwendige Maßnahmen im Kontext einer Sicherheitsbeziehung abgeleitet werden, wie z. B. eine Schlüsselaktualisierung oder auch Software-Aktualisierung vor der Inbetriebnahme einer langlaufenden Kommunikationsbeziehung oder kritischen Operation, um eine Aktualisierung im Kontext einer Verbindung oder eines kritischen Operation des Gerätes zu vermeiden.

Wird also festgestellt, dass das Gerät die Vorgabewerte einhält, so wird beispielsweise beim Ausführen der Steuerbefehle zum Steuern des Gerätes das Gerät für die Steuerung eines Fertigungsprozesses oder Steuerungsprozesses verwendet. Alternativ oder zusätzlich wird durch das Ausführen der Steuerbefehle zum Steuern der Kommunikation mit dem Gerät, dem Gerät oder Netzwerkkomponenten (z. B. ein Gateway wie das Gateway GW) erlaubt, Daten des Gerätes zu verarbeiten und/oder weiter zu verschicken. Alternativ oder zusätzlich wird durch das Ausführen der Steuerbefehle zum Authentisieren des Gerätes, das Gerät authentisiert und/oder als gültiges Gerät akzeptiert, sodass z. B. Daten des Gerätes als vertrauenswürdig angesehen werden.

Wird beispielsweise festgestellt, dass das Gerät die Vorgabewerte nicht einhält, wird beispielsweise das Gerät durch die entsprechenden Steuerbefehle nicht als vertrauenswürdig angesehen und/oder das Gerät wird nicht authentisiert und/oder die Kommunikation mit dem Gerät wird unterbunden (z. B. indem das Gateway GW mittels der Steuerbefehle entsprechend gesteuert wird) und/oder das Gerät wird entsprechend eines vorgegebenen Schemas mittels der Steuerbefehle gesteuert (z. B. ein Reset oder ein Zurücksetzen auf Werkseinstellungen, wenn der Zustand "Manipuliert" erkannt wurde und dieser z. B. entsprechend der Vorgabewerte nicht erlaubt ist).

Die Figur 3 zeigt ein Gerät D, das mit dem Überprüfungsgerät B interagiert. Das Gerät D kann beispielsweise ein IoT-Gerät, ein Fertigungsgerät, ein Feldgerät (z. B. einer Kraftwerksanlage, Fertigungsanlage oder einer Energieverteilungsnetzes), ein Steuergerät (z. B. einer Kraftwerksanlage, Fertigungsanlage oder einer Energieverteilungsnetzes) sein. In Fig 1 ist z. B. das Gerät D das zweite Feldgerät FD2.

Das Gerät D umfasst ein Zustandsmodul 310 und eine Kommunikationsschnittstelle 320, die vorzugsweise über einen Bus 303 kommunikativ verbunden sind.

Das Zustandsmodul 310 ist dazu eingerichtet in einem Speicher (z. B. ein nichtflüchtiger Speicher) Lebenszyklusdaten des Gerätes zu speichern.

Die Kommunikationsschnittstelle 320 ist dazu eingerichtet Lebenszyklusdaten an einen Empfänger, beispielsweise ein Überprüfungsgerät, zu senden.

Das Gerät selbst kann z. B. seine Lebenszyklusdaten (z. B. seinen eigenen Lebenszyklus-Zustand oder nur kurz seinen eigenen Zustand) selbst monitoren (z. B. überwachen und/oder verwalten und im Speicher speichern).

Über die Kommunikationsschnittstelle 320 kann z. B. das Ergebnis (z. B. die Lebenszyklusdaten mit dem eigenen Lebenszyklus-Zustand) einem Überprüfungsgerät bereitgestellt werden. Die Lebenszyklusdaten mit dem Lebenszyklus-Zustand werden in dem Speicher festgehalten oder aufgezeichnet. Damit ist es z. B. möglich, den Lebenszyklus-Zustand dynamisch und/oder bei Bedarf mit Historie z. B. dem Überprüfungsgerät zur Verfügung zu stellen. Die Historie kann z. B. als eine Liste realisiert sein, die die Veränderungen der Lebenszyklusdaten umfasst, wobei die Liste z. B. auch den Zeitpunkt der Veränderung der Lebenszyklusdaten und/oder die veränderten Daten umfasst.

In Fig. 1 bildet das Gerät (z. B. das zweite Feldgerät FD2) mit dem Überprüfungsgerät ein System, wobei das Gerät über ein Kommunikationsmedium ON (z. B. ein Netzwerk wie LAN, WAN, Internet, etc.) mit dem Überprüfungsgerät B kommunikativ verbunden ist.

Des Weiteren sind in der Fig. 1 noch weitere Geräte (z. B. IoT-Geräte) gezeigt. Die Geräte können beispielsweise Feldgeräte (z. B. ein erstes Feldgerät FD1, das zweite Feldgerät FD 2 oder ein drittes Feldgerät FD3) eines Automatisierungsnetzes NW sein, die über ein Gateway GW mit dem Kommunikationsmedium ON verbunden sind, damit ggf. eine Kommunikation mit dem Überprüfungsgerät B und weiteren Feldgeräten (z. B. ein viertes Feldgerät FD4 und/oder ein fünftes Feldgerät FD5).

Mittels der Erfindung kann das Gerät (insbesondere ein IoT-Gerät) seinen aktuellen Lebenszyklus-Zustand (z. B. Lifecycle-Zustand) beispielsweise kryptographisch geschützt (z. B. mittels eines kryptographischen Schutzes) gegenüber dem Überprüfungsgerät über eine Netzwerkkommunikation bestätigen.

Damit das Gerät einen kryptographischen Schutz erstellen kann, umfasst es z. B. (erste) kryptographische Daten C1 (z. B. aktuell konfigurierte kryptographische Schlüssel, Zertifikate, Security-Token). Damit das Überprüfungsgerät den kryptographischen Schutz entfernen kann oder überprüfen kann, umfasst dieses (zweite) kryptographische Daten C2 (z. B. entsprechende kryptographische Schlüssel).

Die Information zum aktuellen Lebenszyklus des Gerätes werden z. B. in den Lebenszyklusdaten gespeichert. Mit diesen Daten kann insbesondere das Gerät gegenüber dem anderen System (z. B. dem Überprüfungsgerät B) authentisiert werden bzw. eine Authentisierung für das Gerät gegenüber dem Überprüfungsgerät vorgenommen werden. Das Überprüfungsgerät B kann beispielsweise auch das Gerät (z. B. das zweite Feldgerät FD2) authentisieren (z. B. mit entsprechenden Steuerbefehlen) damit das gerät z. B. mit anderen Geräten (z. B. das vierte Feldgerät FD4 oder das fünfte Feldgerät FD5) kommunizieren kann. Hierzu kann das Überprüfungsgerät B beispielsweise mittels der Steuerbefehle den anderen Geräten mitteilen, dass das Gerät (z. B. das zweite Feldgerät FD2) vertrauenswürdig ist. Alternativ oder zusätzlich kann mittels der Steuerbefehle ein entsprechender Security-Token erzeugt werden, der diese Authentisierung des Gerätes vornimmt (z. B. indem der Security-Token an die entsprechenden Geräte übermittelt wird).

Die Authentisierung zwischen Gerät und Überprüfungsgerät kann z. B. mittels TLS, IKEv2 oder durch Bereitstellen eines JWT (JSON Web Token) erfolgen.

Dies ist vorteilhaft, damit z. B. Kommunikationspartner, d. h. das andere System (z. B. das Überprüfungsgerät), abhängig von den Lebenszyklusdaten (z. B. dem aktuellen Lebenszyklus-Zustand des Gerätes) das Gerät als zulässig akzeptieren kann, und z. B. eine Filterung zulässiger Aktionen/Datenpakete des Geräts vorgenommen werden kann (z. B. kann dies durch das Überprüfungsgerät mittels entsprechender Steuerbefehle gesteuert werden).

Der Lebenszyklus bzw. die Lebenszyklusdaten können z. B. als Bitfolge oder als textuelle Zeichenkette codiert sein.

Wie bereits erläutert können die Lebenszyklusdaten einen Lebenszyklus-Zustand des Gerätes umfassen, wobei der Lebenszyklus-Zustand beispielsweise einen Zustand "Undefiniert" oder "Festgelegt" oder "Startbereit" oder "Deaktiviert" oder "Fehler", "Manipuliert", "Zurückgesetzt" umfasst.

Die Lebenszyklus-Zustände sind beispielsweise wie folgt definiert:
Undefiniert
   (oder auch als "Undefined" bezeichnet)
   Dem entsprechenden Gerät wurde noch kein Identifizierer (kurz ID) oder eindeutiger Identifizierer (engl. Unique Identifier, UID) z. B. in der Fertigung zugeordnet).
Festgelegt
   (oder auch als "Imprinted" bezeichnet)
   Für das Geräte wurde eine ID festgelegt und beispielsweise in der Firmware des Gerätes gespeichert.
Startbereit
   (oder auch als "Bootstrapped" bezeichnet)
   Auf dem Gerät sind z. B. operative (kryptographische) Schlüssel und/oder Konfigurationsdaten eingespielt.
Deaktiviert
   (oder auch als "Deactivated" bezeichnet)
   Das Gerät wurde außer Betrieb genommen (Außerbetriebnahme) .
Fehler
   (oder auch als "Failure" bezeichnet)
   Bei dem Gerät wurde ein Fehler z. B. durch Selbsttest erkannt.
Manipuliert
   (oder auch als "Integrity Violation" bezeichnet)
   Es wurde eine Manipulation (z. B. wurde eine Malware auf dem Gerät durch eine Antivirensoftware gefunden) erkannt.
Zurückgesetzt
   (oder auch als "Factory Reset" bezeichnet)
   Die Benutzerkonfiguration und/oder weitere Benutzerdaten wurden beispielsweise gelöscht und/oder das Gerät wurde beispielsweise auf Werkseinstellungen zurückgesetzt.

In Varianten des Ausführungsbeispiels kann bei jedem Wechsel eines Lebenszyklus-Zustands in einer Variante zusätzlich ein Lebenszyklus-Zähler aktualisiert (inkrementiert) werden. Dadurch kann z. B. bei einem Gerät im Lebenszyklus-Zustand "bootstrapped" überprüft werden, ob zwischenzeitlich ein weiterer Bootstrapping-Vorgang erfolgt ist.

Die Lebenszyklusdaten können bei einer regulären Kommunikation, d. h. wenn z. B. Statusdaten an ein das Überprüfungsgerät (z. B. ein IoT-Backend) übertragen werden, mitübertragen werden. Vorzugsweise erfolgt dies jedoch situativ abhängig oder situationsabhängig von dem Zweck der Netzwerkkommunikation (z.B. Bei Onboarding, bei Registrierung/Anmeldung an Backend-Dienst) und/oder der Applikation des Geräts, von der die Kommunikation ausgeht.

Dadurch kann insbesondere einreicht werden, dass ein automatisiertes Onboarding nur möglich ist, wenn das Gerät bestätigt, dass es sich tatsächlich in einem vorgegebenen Zustand (z. B. unprovisionierten Betriebszustand oder "Festgelegt") befindet. Es wird z. B. verhindert, dass manipulierte oder defekte Geräte oder auch Geräte, die in einer anderen Umgebung provisioniert (d. h. konfiguriert oder in einen Zustand "Festgelegt" gebracht wurden), automatisiert ein Onboarding durchführen bzw. durchführen können. Hierzu umfassen die Lebenszyklusdaten beispielsweise weitere Informationen, z. B. wann und/oder wo eine Konfiguration des Gerätes vorgenommen wurde, wann und/oder wo eine Konfiguration des Gerätes geändert wurde, Gerätetyp, Position des Gerätes oder eine Kombination aus den genannten Informationen.

Onboarding bedeutet dabei, dass sich das Gerät mit dem Überprüfungsgerät oder mit dem Netzwerk oder mit einem anderen Gerät verbinden kann. Dazu wird z. B. das Gerät registriert, d.h. das Gerät wird beispielsweise in einer Gerätedatenbank oder einem Geräteverzeichnisdienst als registriertes Gerät aufgenommen, oder es wird ein Zugangskonfigurationsdatensatz auf dem Gerät und/oder dem Überprüfungsgeräten oder dem Netzwerk oder einem anderen Gerät eingerichtet, sodass sich das Gerät als registriertes Gerät verbinden kann. Ob dies möglich ist, wird z. B. durch die entsprechenden Steuerbefehle abhängig vom Prüfergebnis gesteuert.

Die Lebenszyklusdaten (z. B. Geräte-Lebenszyklus-Attestierung) können z. B. als separate Datenstruktur (z.B. JSON), in einer Zertifikatsanforderungsnachricht (Certificate Signing Request, CSR), oder in einer TLS-Protokollerweiterung enthalten oder eincodiert sein. In Varianten verfügt ein Gerät über mehrere Gerätezertifikate mit unterschiedlich gesetzten Lebenszyklusdaten (z. B. unterschiedlichen gesetzten Lebenszyklus-Attributen). Das Gerät wählt z. B. abhängig vom aktuellen Lebenszyklus-Zustand das zugeordnete Zertifikat aus und/oder den zugeordneten privaten Geräteschlüssel für die Geräteauthentisierung.

Alternativ besitzt das Gerät ein Gerätezertifikat und/oder mehrere zugehöriges Lebenszyklus-Attribut-Zertifikate, von denen das jeweils passende vom Gerät im Kontext einer Authentisierung dem Kommunikationspartner (z. B. dem Überprüfungsgerät) mit zur Verfügung gestellt werden kann.

In einer Variante signiert das Gerät die Lebenszyklusdaten mit einem vorhandenen gerätespezifischen Schlüssel. Dies hat im Vergleich zur Vorauswahl existierender Token z. B. den Vorteil, dass aktuelle Statusinformation, die ggf. von anderen Entitäten (z.B. Netzwerk-Scanner, Network Access Server) im Netzwerk dynamisch ausgestellt werden, mit eingebunden werden können.

Der Lebenszyklus oder die Lebenszyklusdaten eines oder des Geräts ergeben sich z. B. abhängig von den Konfigurationsdaten des Gerätes. Dies können z. B. der Konfigurationsdatenstand (insbesondere aktuell konfigurierte kryptographische Schlüssel, Zertifikate, Security-Token) sein. Insbesondere kann die verbleibende Laufzeit eines kryptographischen Schlüssels z. B. auf den Lebenszyklus abgebildet werden. Bei Zertifikaten ist diese Information im Zertifikat direkt integriert und kann daher vom Kommunikationspartner geprüft werden. Bei symmetrischen Schlüsseln (z.B. Gruppenschlüsseln) ist die Gültigkeit Teil der Security Policy, die fest konfiguriert sein kann oder in einem Ticket eincodiert oder gespeichert sein kann.

Weiterhin kann ein Zustandswechsel des Lebenszyklus-Zustandes des Gerätes erfolgen, wenn ein Selbsttest des Geräts einen Fehler oder eine Manipulation erkennt. Weiterhin kann ein Zustandswechsel durch Nutzerinteraktion erfolgen, z. B. durch Aktivieren eines "Factory Reset", bei dem alle Nutzerdaten oder vorgegebene Daten des Gerätes gelöscht werden. Auch ist es z. B. möglich, dass ein Lebenszykluszustand nur zeitlich begrenzt aktiv ist, z. B. nach einem Tastendruck (bis zu einem Time Out) oder durch Aktivieren eines Service-Betriebsmodus (bis zu einem Time-Out oder einem Abmelden).

Im Folgenden werden die Lebenszyklusdaten (z. B. Lifecycle Attestation) anhand einer Certificate Extension gezeigt. Diese Extension kann in ein Public Key Zertifikat oder auch ein Attributzertifikates genutzt werden.

Das folgende Beispiel zeigt eine solche Erweiterung:

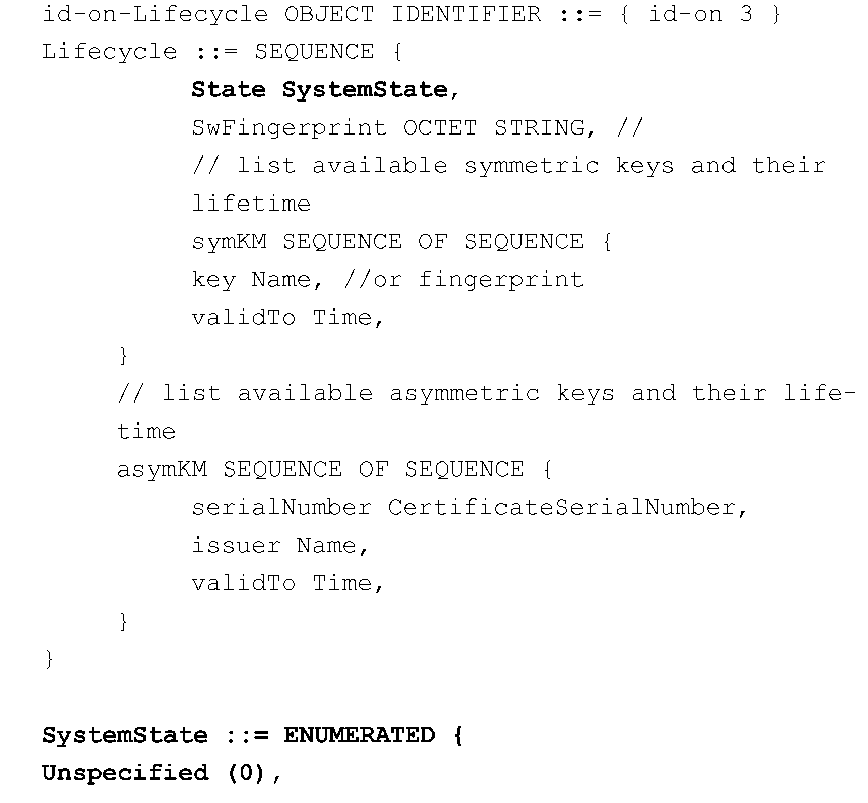

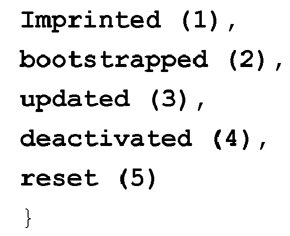

Das Gerät (z. B. das zweite Feldgerät FD2) kann beispielsweise ein Update einer Steuerungssoftware(komponente), z. B. beim Überprüfungsgerät oder einem anderen Server, beantragen.

Das Überprüfungsgerät kann die Installation des Software-Updates in Abhängigkeit des aktuellen Lebenszyklus-Zustandes des Gerätes erlauben und/oder planen (z. B. mittels entsprechender Steuerbefehle zum Steuern des Gerätes) und/oder auch der Fertigungsschritte, an denen das Gerät FD2 beteiligt ist, planen und/oder Steuern (z. B. mit entsprechenden Steuerbefehlen) .

Das Gerät kann sich beim Überprüfungsgerät z. B. auch als Langzeitüberwachungskomponente für den kritischen Teil eines Automatisierungsnetzwerk anmelden und/oder Aktualisierungen von Schlüsselmaterial und/oder auch Software in Abhängigkeit von dem Lebenszykluszustand des Gerätes FD2 und/oder dem jeweiligen Automatisierungsschritt der Automatisierungsanlage mittels der entsprechenden Steuerbefehle steuern (z. B. Steuerbefehle zum Steuern des Gerätes oder der Kommunikation).

Die Lebenszyklusdaten können auch vom Kommunikationspartner (z. B. dem Überprüfungsgerät) für einen Abgleich mit Vorgabewerten (z. B. der lokalen Security Policy) genutzt werden.

In weiteren Varianten kann das Überprüfungsgerät eine Information zum zuletzt gemeldeten Zustand oder allgemein zu zurückliegend gemeldeten Zuständen des Geräts verwalten. Beispielsweise wird überprüft, ob es sich um den identischen Lebenszyklus-Zustand handelt wie beim letzten Zugriff oder, ob eine Änderung des Lebenszyklus-Zustands vorliegt. Damit kann z. B. eine Änderung auch ohne Lebenszykluszähler erkannt werden.

Wird beispielsweise eine Änderung erkannt, kann das Überprüfungsgerät die Änderung plausibilisieren. Beispielsweise werden nur gewisse Zustandsübergänge akzeptiert. Es kann dann z. B. bei der Filterentscheidung, welche Kommandos oder Aktionen des Gerätes zulässig sind, neben den aktuellen Lebenszyklusdaten zusätzlich der letzte hinterlegte (zwischengespeicherte) Lebenszykluszustand des Gerätes berücksichtigt werden.

Beispielsweise können bei einer Änderung des Lebenszykluszustands (z. B. ein Gerätezustand) oder der Lebenszyklusdaten (z. B. Gerätedaten) im Überprüfungsgerät Lebenszyklusdaten (z. B. Gerätedaten, Lebenszykluszustand, Konfigurationsdaten) aktualisiert werden. Dabei können z. B. im Überprüfungsgerät gespeicherte Lebenszyklusdaten gelöscht werden, Lebenszyklusdaten (z. B. Konfigurationsdaten) synchronisiert werden, damit sie wieder mit den tatsächlichen Lebenszyklusdaten übereinstimmen.

Das in den Ausführungsbeispielen erläuterte Überprüfungsgerät oder Gerät kann beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Die Fig. 4 zeigt ein weiteres Ausführungsbeispiel der Erfindung, das als Ablaufdiagramm für ein Verfahren dargestellt ist.

Das Verfahren ist vorzugsweise rechnergestützt realisiert, indem es z. B. durch einen Prozessor ausgeführt wird.

Bei dem Verfahren handelt es sich beispielsweise um ein computerimplementiertes Verfahren zum Überprüfen eines Gerätes.

Das Verfahren umfasst einen ersten Verfahrensschritt 410 zum Empfangen von Lebenszyklusdaten eines Gerätes.

Das Verfahren umfasst einen zweiten Verfahrensschritt 420 zum Ermitteln eines Prüfergebnisses einer Prüfung der Lebenszyklusdaten des Gerätes.

Das Verfahren umfasst einen dritten Verfahrensschritt 430 zum Ausführen von Steuerbefehlen zum Steuern des Gerätes und/oder Steuerbefehlen zum Steuern einer Kommunikation mit dem Gerät und/oder Steuerbefehlen zum Authentisieren des Gerätes.

Beispielsweise werden beim Ermitteln des Prüfergebnisses die Lebenszyklusdaten (z. B. der Lebenszyklus-Zustand und/oder die die Konfigurationsdaten) mit Vorgabewerten (z. B. Vorgabewerte einer Policy) des Überprüfungsgerätes verglichen, und es wird z. B. überprüft, ob die Lebenszyklusdaten die Vorgabewerte einhalten.

Die Vorgabewerte sind beispielsweise anwendungsspezifisch definierbar, dabei lassen sich beispielsweise unterschiedliche Schutzziele durchsetzen:
- Beispielsweise werden von einem Gerät, dessen Lebenszyklusdaten einen Lebenszyklus-Zustand wie "Manipuliert" oder "Fehler" aufweist, keine operativen Statusdaten / Steuerdaten als gültig akzeptiert (oder sie werden entsprechend mit einem Attribut gekennzeichnet). Dies wird beispielsweise mit den Steuerbefehlen zum Steuern der Kommunikation anhand des Prüfergebnisses gesteuert.
- Ein automatisiertes Onboarding (z. B. ein Kommunizieren mit dem Gerät oder ein Registrieren des Geräts oder ein automatisiertes Einrichten einer Konfiguration) wird z. B. vom Überprüfungsgerät (z. B. ein Backend-System) durchgeführt, wenn das Gerät sich beispielsweise in einem Lebenszyklus-Zustand wie "Startbereit" oder "Festgelegt" befindet. Dies hat den Vorteil, dass dadurch sichergestellt werden kann, dass ein (erneutes) Onboarding eines Geräts nur dann möglich ist, wenn sich das Gerät in einem definierten, aus betrieblicher Sicht unkritischen Zustand (hier "Startbereit" oder "Festgelegt") befindet, z.B. bei der erstmaligen Inbetriebnahme oder nach einem Factory Reset. Dadurch wird verhindert, dass kritische Gerätedaten oder andere auf dem Gerät gespeicherte kritische Daten, die im regulären, operativen Betrieb vorliegen, nach einem Onboarding einem anderen Überprüfungsgerät, z.B. ein Backend-System eines anderen Nutzers, versehentlich bereitgestellt werden. Ein Onboarding ist somit nur möglich, wenn sich das Gerät in einem wohldefinierten Lebenszyklus-Zustand ohne gespeicherte sensible Betriebsdaten befindet.

Zusätzlich können beispielsweise aus den Lebenszyklusdaten und/oder dem Prüfergebnis notwendige Maßnahmen im Kontext einer Sicherheitsbeziehung abgeleitet werden, wie z. B. eine Schlüsselaktualisierung oder auch Software-Aktualisierung vor der Inbetriebnahme einer langlaufenden Kommunikationsbeziehung oder kritischen Operation, um eine Aktualisierung im Kontext einer Verbindung oder eines kritischen Operation des Gerätes zu vermeiden.

Wird also festgestellt, dass das Gerät die Vorgabewerte einhält, so wird beispielsweise beim Ausführen der Steuerbefehle zum Steuern des Gerätes das Gerät für die Steuerung eines Fertigungsprozesses oder Steuerungsprozesses verwendet. Alternativ oder zusätzlich wird durch das Ausführen der Steuerbefehle zum Steuern der Kommunikation mit dem Gerät, dem Gerät oder Netzwerkkomponenten (z. B. ein Gateway) erlaubt, Daten des Gerätes zu verarbeiten und/oder weiter zu verschicken. Alternativ oder zusätzlich wird durch das Ausführen der Steuerbefehle zum Authentisieren des Gerätes, das Gerät authentisiert oder als gültiges Gerät akzeptiert, sodass z. B. Daten des Gerätes als vertrauenswürdig angesehen werden.

Die Fig. 5 zeigt ein weiteres Ausführungsbeispiel der Erfindung, das als Ablaufdiagramm für ein Verfahren dargestellt ist.

Das Verfahren ist vorzugsweise rechnergestützt realisiert, indem es z. B. durch einen Prozessor ausgeführt wird.

Bei dem Verfahren handelt es sich beispielsweise um ein computerimplementiertes Verfahren zum Senden von Lebenszyklusdaten eines Gerätes.

Das Verfahren umfasst einen ersten Verfahrensschritt 510 zum Speichern von Lebenszyklusdaten des Gerätes.

Das Verfahren umfasst einen zweiten Verfahrensschritt 520 zum Senden der Lebenszyklusdaten an einen Empfänger, beispielsweise ein Überprüfungsgerät.

Die Erfindung betrifft ein Verfahren und Geräte, um eine Überwachung in Automatisierungsanlagen möglichst flexibel zu realisieren. Das Überwachen in Automatisierungsanlagen kann mittels eines Überprüfungsgerätes realisiert werden, das eine Überprüfung von Geräten der Automatisierungsanlage anhand eines Lebenszyklus-Zustandes eines entsprechenden Gerätes durchführt.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Überprüfungsgerät aufweisend:
- eine Kommunikationsschnittstelle, die zum Empfangen von Lebenszyklusdaten eines Gerätes eingerichtet ist;
- ein Überprüfungsmodul, wobei
∘ das Überprüfungsmodul dazu eingerichtet ist ein Prüfergebnis einer Prüfung der Lebenszyklusdaten des Gerätes zu ermitteln,
∘ abhängig vom Prüfergebnis Steuerbefehle zum Steuern des Gerätes und/oder Steuerbefehle zum Steuern einer Kommunikation mit dem Gerät und/oder Steuerbefehle zum Authentisieren des Gerätes bereitgestellt und/oder ausgeführt werden.

2. Überprüfungsgerät nach dem vorhergehenden Anspruch, wobei abhängig von den Steuerbefehlen und/oder des Prüfergebnisses eine Filterung zulässiger Aktionen und/oder Datenpakete des Geräts gesteuert wird.

3. Überprüfungsgerät nach einem der vorhergehenden Ansprüche, wobei
- Lebenszyklusdaten als Bitfolge oder als textuelle Zeichenkette codiert sind.

4. Überprüfungsgerät nach einem der vorhergehenden Ansprüche, wobei
- die Lebenszyklusdaten einen Lebenszyklus-Zustand des Gerätes umfassen,
- der Lebenszyklus-Zustand beispielsweise einen Zustand "Undefiniert" oder "Festgelegt" oder "Startbereit" oder "Deaktiviert oder "Fehler", "Manipuliert", "Zurückgesetzt" umfasst.

5. Überprüfungsgerät nach Anspruch 4, wobei
- bei einem Wechsel des Lebenszyklus-Zustands ein zusätzlich ein Lebenszyklus-Zähler aktualisiert wird;
- beispielsweise durch das Überprüfungsgerät ein Lebenszyklus-Zähler für das Gerät gespeichert und/oder gesteuert wird.

6. Überprüfungsgerät nach einem der vorhergehenden Ansprüche, wobei
- die Lebenszyklusdaten die Konfigurationsdaten des Gerätes umfassen,
- die Konfigurationsdaten beispielsweise aktuell konfigurierte kryptographische Schlüssel und/oder Zertifikate und/oder Security-Token des Gerätes und/oder Laufzeiten für kryptographische Schlüssel sind.

7. Überprüfungsgerät nach einem der vorhergehenden Ansprüche, wobei die Lebenszyklusdaten in einer TLS-Protokollerweiterung oder in einer Zertifikatsanforderungsnachricht gespeichert sind, die das Überprüfungsgerät empfängt.

8. Überprüfungsgerät nach einem der vorhergehenden Ansprüche, wobei
- die Lebenszyklusdaten mittels eines kryptographischen Schutzes kryptographisch geschützt sind,
- das Überprüfungsmodul dazu eingerichtet bei der Prüfung den kryptographischen Schutz der Lebenszyklusdaten zu überprüfen und ein Ergebnis dieses Prüfens im Prüfergebnis zu speichern.

9. Überprüfungsgerät nach Anspruch 8, wobei der kryptographische Schutz mittels gerätespezifischer kryptographischer Daten durch das Gerät erzeugt wird.

10. Gerät aufweisend:
- ein Zustandsmodul, wobei das Zustandsmodul dazu eingerichtet ist in einem Speicher Lebenszyklusdaten des Gerätes zu speichern;
- eine Kommunikationsschnittstelle, wobei die Kommunikationsschnittstelle dazu eingerichtet ist Lebenszyklusdaten an einen Empfänger, beispielsweise ein Überprüfungsgerät, zu senden.

11. Gerät nach Anspruch 10, wobei
- die Lebenszyklusdaten einen Lebenszyklus-Zustand des Gerätes umfassen,
- der Lebenszyklus-Zustand beispielsweise einen Zustand "Undefiniert" oder "Festgelegt" oder "Startbereit" oder "Deaktiviert oder "Fehler", "Manipuliert", "Zurückgesetzt" umfasst.

12. Gerät nach Anspruch 11, wobei
- bei einem Wechsel des Lebenszyklus-Zustands ein zusätzlich ein Lebenszyklus-Zähler aktualisiert wird.

13. Gerät nach einem der Ansprüche 10-12, wobei
- die Lebenszyklusdaten die Konfigurationsdaten des Gerätes umfassen,
- die Konfigurationsdaten beispielsweise aktuell konfigurierte kryptographische Schlüssel und/oder Zertifikate und/oder Security-Token des Gerätes und/oder Laufzeiten für kryptographische Schlüssel sind.

14. Gerät nach einem der Ansprüche 10-13, wobei die Lebenszyklusdaten in einer TLS-Protokollerweiterung oder in einer Zertifikatsanforderungsnachricht gespeichert sind, die das Überprüfungsgerät empfängt.

15. Gerät nach einem der Ansprüche 10-14, wobei
- die Lebenszyklusdaten mittels eines kryptographischen Schutzes kryptographisch geschützt sind,
- das Zustandsmodul dazu eingerichtet ist den kryptographischen Schutz der Lebenszyklusdaten zu erzeugen.

16. Gerät nach Anspruch 15, wobei der kryptographische Schutz mittels gerätespezifischer kryptographischer Daten durch das Gerät erzeugt wird.

17. Computerimplementiertes Verfahren zum Überprüfen eines Gerätes mit folgenden Verfahrensschritten:
- Empfangen von Lebenszyklusdaten eines Gerätes;
- Ermitteln eines Prüfergebnisses einer Prüfung der Lebenszyklusdaten des Gerätes;
- Ausführen von Steuerbefehlen zum Steuern des Gerätes und/oder Steuerbefehlen zum Steuern einer Kommunikation mit dem Gerät und/oder Steuerbefehlen zum Authentisieren des Gerätes.

18. Computerimplementiertes Verfahren zum Senden von Lebenszyklusdaten eines Gerätes mit folgenden Verfahrensschritten:
- Speichern von Lebenszyklusdaten des Gerätes;
- Senden der Lebenszyklusdaten an einen Empfänger, beispielsweise ein Überprüfungsgerät.

19. Computerprogrammprodukt mit Programmbefehlen zur Durchführung des Verfahrens nach Anspruch 17 und/oder 18.

20. Bereitstellungsvorrichtung für das Computerprogrammprodukt nach Anspruch 19, wobei die Bereitstellungsvorrichtung das Computerprogrammprodukt speichert und/oder bereitstellt.

## Geänderte Patentansprüche

### Geänderte Patentansprüche gemäss Regel 137(2) EPÜ.

**1.** Überprüfungsgerät aufweisend:
- eine Kommunikationsschnittstelle, die zum Empfangen von Lebenszyklusdaten eines Gerätes eingerichtet ist;
- ein Überprüfungsmodul, wobei
∘ das Überprüfungsmodul dazu eingerichtet ist ein Prüfergebnis einer Prüfung der Lebenszyklusdaten des Gerätes zu ermitteln,
∘ abhängig vom Prüfergebnis Steuerbefehle zum Steuern des Gerätes und/oder Steuerbefehle zum Steuern einer Kommunikation mit dem Gerät und/oder Steuerbefehle zum Authentisieren des Gerätes bereitgestellt und/oder ausgeführt werden,
∘ das Gerät ein IoT-Gerät, ein Fertigungsgerät, ein Feldgerät oder ein Steuergerät ist.

**2.** Überprüfungsgerät nach dem vorhergehenden Anspruch, wobei abhängig von den Steuerbefehlen und/oder des Prüfergebnisses eine Filterung zulässiger Aktionen und/oder Datenpakete des Geräts gesteuert wird.

**3.** Überprüfungsgerät nach einem der vorhergehenden Ansprüche, wobei
- Lebenszyklusdaten als Bitfolge oder als textuelle Zeichenkette codiert sind.

**4.** Überprüfungsgerät nach einem der vorhergehenden Ansprüche, wobei
- die Lebenszyklusdaten einen Lebenszyklus-Zustand des Gerätes umfassen,
- der Lebenszyklus-Zustand beispielsweise einen Zustand "Undefiniert" oder "Festgelegt" oder "Startbereit" oder "Deaktiviert oder "Fehler", "Manipuliert", "Zurückgesetzt" umfasst.

**5.** Überprüfungsgerät nach Anspruch 4, wobei
- bei einem Wechsel des Lebenszyklus-Zustands ein zusätzlich ein Lebenszyklus-Zähler aktualisiert wird;
- beispielsweise durch das Überprüfungsgerät ein Lebenszyklus-Zähler für das Gerät gespeichert und/oder gesteuert wird.

**6.** Überprüfungsgerät nach einem der vorhergehenden Ansprüche, wobei
- die Lebenszyklusdaten die Konfigurationsdaten des Gerätes umfassen,
- die Konfigurationsdaten beispielsweise aktuell konfigurierte kryptographische Schlüssel und/oder Zertifikate und/oder Security-Token des Gerätes und/oder Laufzeiten für kryptographische Schlüssel sind.

**7.** Überprüfungsgerät nach einem der vorhergehenden Ansprüche, wobei die Lebenszyklusdaten in einer TLS-Protokollerweiterung oder in einer Zertifikatsanforderungsnachricht gespeichert sind, die das Überprüfungsgerät empfängt.

**8.** Überprüfungsgerät nach einem der vorhergehenden Ansprüche, wobei
- die Lebenszyklusdaten mittels eines kryptographischen Schutzes kryptographisch geschützt sind,
- das Überprüfungsmodul dazu eingerichtet bei der Prüfung den kryptographischen Schutz der Lebenszyklusdaten zu überprüfen und ein Ergebnis dieses Prüfens im Prüfergebnis zu speichern.

**9.** Überprüfungsgerät nach Anspruch 8, wobei der kryptographische Schutz mittels gerätespezifischer kryptographischer Daten durch das Gerät erzeugt wird.

**10.** Gerät aufweisend:
- ein Zustandsmodul, wobei das Zustandsmodul dazu eingerichtet ist in einem Speicher Lebenszyklusdaten des Gerätes zu speichern;
- eine Kommunikationsschnittstelle, wobei
- die Kommunikationsschnittstelle dazu eingerichtet ist Lebenszyklusdaten an einen Empfänger, beispielsweise ein Überprüfungsgerät, zu senden,
- das Gerät ein IoT-Gerät, ein Fertigungsgerät, ein Feld-gerät oder ein Steuergerät ist.

**11.** Gerät nach Anspruch 10, wobei
- die Lebenszyklusdaten einen Lebenszyklus-Zustand des Gerätes umfassen,
- der Lebenszyklus-Zustand beispielsweise einen Zustand "Undefiniert" oder "Festgelegt" oder "Startbereit" oder "Deaktiviert oder "Fehler", "Manipuliert", "Zurückgesetzt" umfasst.

**12.** Gerät nach Anspruch 11, wobei
- bei einem Wechsel des Lebenszyklus-Zustands ein zusätzlich ein Lebenszyklus-Zähler aktualisiert wird.

**13.** Gerät nach einem der Ansprüche 10-12, wobei
- die Lebenszyklusdaten die Konfigurationsdaten des Gerätes umfassen,
- die Konfigurationsdaten beispielsweise aktuell konfigurierte kryptographische Schlüssel und/oder Zertifikate und/oder Security-Token des Gerätes und/oder Laufzeiten für kryptographische Schlüssel sind.

**14.** Gerät nach einem der Ansprüche 10-13, wobei die Lebenszyklusdaten in einer TLS-Protokollerweiterung oder in einer Zertifikatsanforderungsnachricht gespeichert sind, die das Überprüfungsgerät empfängt.

**15.** Gerät nach einem der Ansprüche 10-14, wobei
- die Lebenszyklusdaten mittels eines kryptographischen Schutzes kryptographisch geschützt sind,
- das Zustandsmodul dazu eingerichtet ist den kryptographischen Schutz der Lebenszyklusdaten zu erzeugen.

**16.** Gerät nach Anspruch 15, wobei der kryptographische Schutz mittels gerätespezifischer kryptographischer Daten durch das Gerät erzeugt wird.

**17.** Computerimplementiertes Verfahren zum Überprüfen eines Gerätes mit folgenden Verfahrensschritten:
- Empfangen von Lebenszyklusdaten eines Gerätes, das Gerät ein IoT-Gerät, ein Fertigungsgerät, ein Feld-gerät oder ein Steuergerät ist;
- Ermitteln eines Prüfergebnisses einer Prüfung der Lebenszyklusdaten des Gerätes;
- Ausführen von Steuerbefehlen zum Steuern des Gerätes und/oder Steuerbefehlen zum Steuern einer Kommunikation mit dem Gerät und/oder Steuerbefehlen zum Authentisieren des Gerätes.

**18.** Computerimplementiertes Verfahren zum Senden von Lebenszyklusdaten eines Gerätes mit folgenden Verfahrensschritten:
- Speichern von Lebenszyklusdaten des Gerätes, wobei das Gerät ein IoT-Gerät, ein Fertigungsgerät, ein Feldgerät oder ein Steuergerät ist;
- Senden der Lebenszyklusdaten an einen Empfänger, beispielsweise ein Überprüfungsgerät.

**19.** Computerprogrammprodukt mit Programmbefehlen zur Durchführung des Verfahrens nach Anspruch 17 und/oder 18.

**20.** Bereitstellungsvorrichtung für das Computerprogrammprodukt nach Anspruch 19, wobei die Bereitstellungsvorrichtung das Computerprogrammprodukt speichert und/oder bereitstellt.

**1.** Überprüfungsgerät aufweisend:
- eine Kommunikationsschnittstelle, die zum Empfangen von Lebenszyklusdaten eines Gerätes eingerichtet ist;
- ein Überprüfungsmodul, wobei
∘ das Überprüfungsmodul dazu eingerichtet ist ein Prüfergebnis einer Prüfung der Lebenszyklusdaten des Gerätes zu ermitteln,
∘ abhängig vom Prüfergebnis Steuerbefehle zum Steuern des Gerätes ausgeführt werden,
∘ mit den Steuerbefehlen ein Onboarding des Gerätes gesteuert wird,
∘ das Gerät ein IoT-Gerät, ein Fertigungsgerät, ein Feldgerät oder ein Steuergerät ist.

**2.** Überprüfungsgerät nach dem vorhergehenden Anspruch, wobei abhängig von den Steuerbefehlen und/oder des Prüfergebnisses eine Filterung zulässiger Aktionen und/oder Datenpakete des Geräts gesteuert wird.

**3.** Überprüfungsgerät nach einem der vorhergehenden Ansprüche, wobei
- Lebenszyklusdaten als Bitfolge oder als textuelle Zeichenkette codiert sind.

**4.** Überprüfungsgerät nach einem der vorhergehenden Ansprüche, wobei
- die Lebenszyklusdaten einen Lebenszyklus-Zustand des Gerätes umfassen,
- der Lebenszyklus-Zustand beispielsweise einen Zustand "Undefiniert" oder "Festgelegt" oder "Startbereit" oder "Deaktiviert oder "Fehler", "Manipuliert", "Zurückgesetzt" umfasst.

**5.** Überprüfungsgerät nach Anspruch 4, wobei
- bei einem Wechsel des Lebenszyklus-Zustands ein zusätzlich ein Lebenszyklus-Zähler aktualisiert wird;
- beispielsweise durch das Überprüfungsgerät ein Lebenszyklus-Zähler für das Gerät gespeichert und/oder gesteuert wird.

**6.** Überprüfungsgerät nach einem der vorhergehenden Ansprüche, wobei
- die Lebenszyklusdaten die Konfigurationsdaten des Gerätes umfassen,
- die Konfigurationsdaten beispielsweise aktuell konfigurierte kryptographische Schlüssel und/oder Zertifikate und/oder Security-Token des Gerätes und/oder Laufzeiten für kryptographische Schlüssel sind.

**7.** Überprüfungsgerät nach einem der vorhergehenden Ansprüche, wobei die Lebenszyklusdaten in einer TLS-Protokollerweiterung oder in einer Zertifikatsanforderungsnachricht gespeichert sind, die das Überprüfungsgerät empfängt.

**8.** Überprüfungsgerät nach einem der vorhergehenden Ansprüche, wobei
- die Lebenszyklusdaten mittels eines kryptographischen Schutzes kryptographisch geschützt sind,
- das Überprüfungsmodul dazu eingerichtet bei der Prüfung den kryptographischen Schutz der Lebenszyklusdaten zu überprüfen und ein Ergebnis dieses Prüfens im Prüfergebnis zu speichern.

**9.** Überprüfungsgerät nach Anspruch 8, wobei der kryptographische Schutz mittels gerätespezifischer kryptographischer Daten durch das Gerät erzeugt wird.

**10.** Gerät aufweisend:
- ein Zustandsmodul, wobei das Zustandsmodul dazu eingerichtet ist in einem Speicher Lebenszyklusdaten des Gerätes zu speichern;
- eine Kommunikationsschnittstelle, wobei
- die Kommunikationsschnittstelle dazu eingerichtet ist Lebenszyklusdaten an einen Empfänger, beispielsweise ein Überprüfungsgerät, zu senden,
- das Gerät ein IoT-Gerät, ein Fertigungsgerät, ein Feld-gerät oder ein Steuergerät ist.

**11.** Gerät nach Anspruch 10, wobei
- die Lebenszyklusdaten einen Lebenszyklus-Zustand des Gerätes umfassen,
- der Lebenszyklus-Zustand beispielsweise einen Zustand "Undefiniert" oder "Festgelegt" oder "Startbereit" oder "Deaktiviert oder "Fehler", "Manipuliert", "Zurückgesetzt" umfasst.

**12.** Gerät nach Anspruch 11, wobei
- bei einem Wechsel des Lebenszyklus-Zustands ein zusätzlich ein Lebenszyklus-Zähler aktualisiert wird.

**13.** Gerät nach einem der Ansprüche 10-12, wobei
- die Lebenszyklusdaten die Konfigurationsdaten des Gerätes umfassen,
- die Konfigurationsdaten beispielsweise aktuell konfigurierte kryptographische Schlüssel und/oder Zertifikate und/oder Security-Token des Gerätes und/oder Laufzeiten für kryptographische Schlüssel sind.

**14.** Gerät nach einem der Ansprüche 10-13, wobei die Lebenszyklusdaten in einer TLS-Protokollerweiterung oder in einer Zertifikatsanforderungsnachricht gespeichert sind, die das Überprüfungsgerät empfängt.

**15.** Gerät nach einem der Ansprüche 10-14, wobei
- die Lebenszyklusdaten mittels eines kryptographischen Schutzes kryptographisch geschützt sind,
- das Zustandsmodul dazu eingerichtet ist den kryptographischen Schutz der Lebenszyklusdaten zu erzeugen.

**16.** Gerät nach Anspruch 15, wobei der kryptographische Schutz mittels gerätespezifischer kryptographischer Daten durch das Gerät erzeugt wird.

**17.** Computerimplementiertes Verfahren zum Überprüfen eines Gerätes mit folgenden Verfahrensschritten:
- Empfangen von Lebenszyklusdaten eines Gerätes, wobei das Gerät ein IoT-Gerät, ein Fertigungsgerät, ein Feld-gerät oder ein Steuergerät ist;
- Ermitteln eines Prüfergebnisses einer Prüfung der Lebenszyklusdaten des Gerätes;
- Ausführen von Steuerbefehlen zum Steuern des Gerätes, wobei mit den Steuerbefehlen ein Onboarding des Gerätes gesteuert wird.

**18.** Computerimplementiertes Verfahren zum Senden von Lebenszyklusdaten eines Gerätes mit folgenden Verfahrensschritten:
- Speichern von Lebenszyklusdaten des Gerätes, wobei das Gerät ein IoT-Gerät, ein Fertigungsgerät, ein Feldgerät oder ein Steuergerät ist;
- Senden der Lebenszyklusdaten an einen Empfänger, beispielsweise ein Überprüfungsgerät.

**19.** Computerprogrammprodukt mit Programmbefehlen zur Durchführung des Verfahrens nach Anspruch 17 und/oder 18.

**20.** Bereitstellungsvorrichtung für das Computerprogrammprodukt nach Anspruch 19, wobei die Bereitstellungsvorrichtung das Computerprogrammprodukt speichert und/oder bereitstellt.

**1.** Überprüfungsgerät aufweisend:
- eine Kommunikationsschnittstelle, die zum Empfangen von Lebenszyklusdaten eines Gerätes eingerichtet ist, wobei die Lebenszyklusdaten abhängig oder situationsabhängig von dem Zweck der Netzwerkkommunikation und/oder der Applikation des Geräts übertragen werden;
- ein Überprüfungsmodul, wobei
∘ das Überprüfungsmodul dazu eingerichtet ist ein Prüfergebnis einer Prüfung der Lebenszyklusdaten des Gerätes zu ermitteln,
∘ abhängig vom Prüfergebnis Steuerbefehle zum Steuern des Gerätes ausgeführt werden,
∘ mit den Steuerbefehlen ein Onboarding des Gerätes gesteuert wird,
∘ das Gerät ein IoT-Gerät, ein Fertigungsgerät, ein Feldgerät oder ein Steuergerät ist.

**2.** Überprüfungsgerät nach dem vorhergehenden Anspruch, wobei abhängig von den Steuerbefehlen und/oder des Prüfergebnisses eine Filterung zulässiger Aktionen und/oder Datenpakete des Geräts gesteuert wird.

**3.** Überprüfungsgerät nach einem der vorhergehenden Ansprüche, wobei
- Lebenszyklusdaten als Bitfolge oder als textuelle Zeichenkette codiert sind.

**4.** Überprüfungsgerät nach einem der vorhergehenden Ansprüche, wobei
- die Lebenszyklusdaten einen Lebenszyklus-Zustand des Gerätes umfassen,
- der Lebenszyklus-Zustand beispielsweise einen Zustand "Undefiniert" oder "Festgelegt" oder "Startbereit" oder "Deaktiviert oder "Fehler", "Manipuliert", "Zurückgesetzt" umfasst.

**5.** Überprüfungsgerät nach Anspruch 4, wobei
- bei einem Wechsel des Lebenszyklus-Zustands ein zusätzlich ein Lebenszyklus-Zähler aktualisiert wird;
- beispielsweise durch das Überprüfungsgerät ein Lebenszyklus-Zähler für das Gerät gespeichert und/oder gesteuert wird.

**6.** Überprüfungsgerät nach einem der vorhergehenden Ansprüche, wobei
- die Lebenszyklusdaten die Konfigurationsdaten des Gerätes umfassen,
- die Konfigurationsdaten beispielsweise aktuell konfigurierte kryptographische Schlüssel und/oder Zertifikate und/oder Security-Token des Gerätes und/oder Laufzeiten für kryptographische Schlüssel sind.

**7.** Überprüfungsgerät nach einem der vorhergehenden Ansprüche, wobei die Lebenszyklusdaten in einer TLS-Protokollerweiterung oder in einer Zertifikatsanforderungsnachricht gespeichert sind, die das Überprüfungsgerät empfängt.

**8.** Überprüfungsgerät nach einem der vorhergehenden Ansprüche, wobei
- die Lebenszyklusdaten mittels eines kryptographischen Schutzes kryptographisch geschützt sind,
- das Überprüfungsmodul dazu eingerichtet bei der Prüfung den kryptographischen Schutz der Lebenszyklusdaten zu überprüfen und ein Ergebnis dieses Prüfens im Prüfergebnis zu speichern.

**9.** Überprüfungsgerät nach Anspruch 8, wobei der kryptographische Schutz mittels gerätespezifischer kryptographischer Daten durch das Gerät erzeugt wird.

**10.** Gerät aufweisend:
- ein Zustandsmodul, wobei das Zustandsmodul dazu eingerichtet ist in einem Speicher Lebenszyklusdaten des Gerätes zu speichern, wobei die Lebenszyklusdaten abhängig oder situationsabhängig von dem Zweck der Netzwerkkommunikation und/oder der Applikation des Geräts übertragen werden;
- eine Kommunikationsschnittstelle, wobei
- die Kommunikationsschnittstelle dazu eingerichtet ist Lebenszyklusdaten an einen Empfänger, beispielsweise ein Überprüfungsgerät, zu senden,
- das Gerät ein IoT-Gerät, ein Fertigungsgerät, ein Feld-gerät oder ein Steuergerät ist.

**11.** Gerät nach Anspruch 10, wobei
- die Lebenszyklusdaten einen Lebenszyklus-Zustand des Gerätes umfassen,
- der Lebenszyklus-Zustand beispielsweise einen Zustand "Undefiniert" oder "Festgelegt" oder "Startbereit" oder "Deaktiviert oder "Fehler", "Manipuliert", "Zurückgesetzt" umfasst.

**12.** Gerät nach Anspruch 11, wobei
- bei einem Wechsel des Lebenszyklus-Zustands ein zusätzlich ein Lebenszyklus-Zähler aktualisiert wird.

**13.** Gerät nach einem der Ansprüche 10-12, wobei
- die Lebenszyklusdaten die Konfigurationsdaten des Gerätes umfassen,
- die Konfigurationsdaten beispielsweise aktuell konfigurierte kryptographische Schlüssel und/oder Zertifikate und/oder Security-Token des Gerätes und/oder Laufzeiten für kryptographische Schlüssel sind.

**14.** Gerät nach einem der Ansprüche 10-13, wobei die Lebenszyklusdaten in einer TLS-Protokollerweiterung oder in einer Zertifikatsanforderungsnachricht gespeichert sind, die das Überprüfungsgerät empfängt.

**15.** Gerät nach einem der Ansprüche 10-14, wobei
- die Lebenszyklusdaten mittels eines kryptographischen Schutzes kryptographisch geschützt sind,
- das Zustandsmodul dazu eingerichtet ist den kryptographischen Schutz der Lebenszyklusdaten zu erzeugen.

**16.** Gerät nach Anspruch 15, wobei der kryptographische Schutz mittels gerätespezifischer kryptographischer Daten durch das Gerät erzeugt wird.

**17.** Computerimplementiertes Verfahren zum Überprüfen eines Gerätes mit folgenden Verfahrensschritten:
- Empfangen von Lebenszyklusdaten eines Gerätes, wobei
- das Gerät ein IoT-Gerät, ein Fertigungsgerät, ein Feldgerät oder ein Steuergerät ist,
- die Lebenszyklusdaten abhängig oder situationsabhängig von dem Zweck der Netzwerkkommunikation und/oder der Applikation des Geräts übertragen werden;
- Ermitteln eines Prüfergebnisses einer Prüfung der Lebenszyklusdaten des Gerätes;
- Ausführen von Steuerbefehlen zum Steuern des Gerätes und/oder Steuerbefehlen zum Steuern einer Kommunikation mit dem Gerät und/oder Steuerbefehlen zum Authentisieren des Gerätes.

**18.** Computerimplementiertes Verfahren zum Senden von Lebenszyklusdaten eines Gerätes mit folgenden Verfahrensschritten:
- Speichern von Lebenszyklusdaten des Gerätes, wobei
- das Gerät ein IoT-Gerät, ein Fertigungsgerät, ein Feldgerät oder ein Steuergerät ist;
- die Lebenszyklusdaten abhängig oder situationsabhängig von dem Zweck der Netzwerkkommunikation und/oder der Applikation des Geräts übertragen werden;
- Senden der Lebenszyklusdaten an einen Empfänger, beispielsweise ein Überprüfungsgerät.

**19.** Computerprogrammprodukt mit Programmbefehlen zur Durchführung des Verfahrens nach Anspruch 17 und/oder 18.

**20.** Bereitstellungsvorrichtung für das Computerprogrammprodukt nach Anspruch 19, wobei die Bereitstellungsvorrichtung das Computerprogrammprodukt speichert und/oder bereitstellt.
